(19) Europäisches Patentamt
European Patent Office
Office européen des brevets

(11) Veröffentlichungsnummer: **0 000 363**
**A1**

# (12) EUROPÄISCHE PATENTANMELDUNG

(21) Anmeldenummer: **78100285.2**

(22) Anmeldetag: **30.06.78**

(51) Int. Cl.²: **C08G69/14**, C08G69/16

(30) Priorität: **16.07.77 DE 2732329**

(43) Veröffentlichungstag der Anmeldung: **24.01.79 Patentblatt 79/2**

(84) Benannte Vertragsstaaten: **BE CH DE FR GB NL SE**

(71) Anmelder: **BASF Aktiengesellschaft, Carl-Bosch-Strasse 38, D-6700 Ludwigshafen (DE)**

(72) Erfinder: **Cordes, Claus, Dr., Halbergstrasse 13, D-6719 Weisenheim (DE)**
**Weiss, Hans-Peter, Dr., Moltkestrasse 58, D-6701 Altrip (DE)**

## (54) Höherviskose Polyamide, Verfahren zu ihrer Herstellung und Verwendung für Folien und Monofile.

(57) Die Erfindung betrifft höherviskose Polyamide mit einer Schmelzviskosität von mehr als 1500 Poise auf der Basis von ε-Caprolactam sowie ein Verfahren zu ihrer Herstellung durch kontinuierliche Polymerisation der Monomeren in Gegenwart geringer Mengen Wasser im VK-Rohr. Die hohe Schmelzviskosität wird dadurch erreicht, dass die Polyamide 0,1 bis 2,5 mMol eines trifunktionellen aliphatischen oder alicyclischen Amins der allgemeinen Formel

$$H_2N-R-NH-R-NH_2$$

einkondensiert enthalten. Die höherviskosen Polyamide können zur Herstellung von Folien und Monofilen, insbesondere für Verbundfolien mit Polyäthylen, verwendet werden.

EP 0 000 363 A1

BASF Aktiengesellschaft O.Z. 0050/032694

Höherviskose Polyamide, Verfahren zu ihrer Herstellung und Verwendung für Folien und Monofile

Die Erfindung betrifft höherviskose Polyamide, die für die Extrusionsverarbeitung und die Folienherstellung geeignet sind.

Die übliche Schmelzkondensation von ε-Caprolactam in Gegenwart von Wasser und gegebenenfalls Reglern, Katalysatoren und Comonomeren führt zu mittelviskosen Polymeren, die nach Extraktion der niedermolekularen Anteile durch heißes Wasser Schmelzviskositäten von ca. 1 500 Poise aufweisen.

Für die Extrusionsverarbeitung von Polyamiden zu Profilen, Platten, Monofilen sowie insbesondere zur Herstellung von Folien werden höherviskose Polyamide benötigt. Mittelviskose Produkte lassen sich nach diesem Verfahrennur schwierig oder gar nicht verarbeiten.

Eine Möglichkeit zur Herstellung von höhermolekularen Produkten mit Schmelzviskositäten über 1 500 Poise besteht darin, in der Nachkondensationsphase auf die Polyamid-Schmelze Unterdruck einwirken zu lassen. Unter Produktionsbedingungen führen jedoch unvermeidbare Undichtigkeiten

Dd/Fe

technischer Apparate wegen der hohen Sauerstoffempfindlichkeit von Polyamidschmelzen nur zu Produkten mit minderwertiger Eigenfarbe. Darüber hinaus erlaubt das am häufigsten praktizierte Verfahren zur kontinuierlichen drucklosen Herstellung von Poly-$\varepsilon$-Caprolactam, das sog. VK-Rohr-Verfahren, in seiner üblichen Form nicht die Anwendung von Unterdruck in der Nachkondensationsphase.

Die Herstellung höherviskoser Produkte erfolgt daher in der Praxis meist durch Nachkondensation des granulierten Polyamids in fester Phase bei Temperaturen oberhalb 130°C z.B. unter Stickstoff. Dieser Prozeß läßt sich nicht bei niederschmelzenden Polyamiden, wie z.B. Copolyamiden, ausführen und erfordert zusätzliche Einrichtungen, mittlere Reaktionszeiten von 30 bis 150 Stunden und liefert Produkte mit teilweise ungleichmäßiger Viskosität, was sich bei der Verarbeitung störend auswirkt.

Es ist bekannt, daß die Viskosität von Polyamiden durch Einkondensieren von Bislactamen oder trifunktionellen Comonomeren wie Tricarbonsäuren erhöht werden kann. Die bisher vorgeschlagenen Comonomeren führen aber zu Produkten, die z.B. für die Herstellung dünner Monofile und Folien nicht geeignet sind. Die Ursache dafür sind vernetzte, gelagerte Anteile und ein ungenügendes Erstarrungsverhalten, was neben Verarbeitungsstörungen zu Inhomogenitäten und ungenügender Transparenz führt.

Der vorliegenden Erfindung lag die Aufgabe zugrunde, hochviskose Polyamide auf Basis von Caprolactam mit einer Schmelzviskosität von mehr als 1 500 Poise bereitzustellen, welche die geschilderten Nachteile nicht aufweisen und welche durch Kondensation in der Schmelze auch kontinuierlich in einfachen VK-Rohren hergestellt werden können.

Diese Aufgabe wird erfindungsgemäß gelöst durch hochviskose Polyamide auf Basis von ε-Caprolactam, die 0,1 bis 2,5 mMol $H_2N-R-NH-R-NH_2$, bezogen auf 1 Mol Caprolactam als Comonomeres einkondensiert enthalten, wobei R zweiwertige, gesättigte aliphatische oder alicyclische Kohlenwasserstoffreste mit 2 bis 15 Kohlenstoffatomen sind.

Die Polyamide können neben ε-Caprolactam auch andere polyamidbildende Monomere in untergeordneten Mengen einkondensiert enthalten. In einer bevorzugten Ausführungsform werden auf 100 Gewichtsteile ε-Caprolactam 5 bis 30 Gewichtsteile eines Salzes aus Adipinsäure und Hexamethylendiamin (AH-Salz) und/oder eines Salzes aus Terephthalsäure und Hexamethylendiamin (TH-Salz) als Comonomere eingesetzt. Anstelle der Salze können auch deren Einzel-Komponenten, Derivate davon, oder auch andere Monomere verwendet werden.

Erfindungsgemäß werden den monomeren Ausgangsstoffen 0,1 bis 2,5 mMol, vorzugsweise 0,5 bis 1,5 mMol, $NH_2-R-NH-R-NH_2$ pro Mol Caprolactam zugesetzt. R ist dabei ein zweiwertiger gesättigter Kohlenwasserstoffrest mit aliphatischem oder alicyclischem Charakter, vorzugsweise mit der Summenformel $C_nH_{2n}$, $C_mH_{2m-4}$ oder $C_pH_{2p-8}$, wobei n zwischen 2 und 10, m zwischen 6 und 12 und p zwischen 13 und 15 liegen kann.

Die Herstellung solcher Amine kann nach bekannten Verfahren erfolgen, z.B. durch Abspalten von $NH_3$ aus den entsprechenden Diaminen in Gegenwart von Protonen oder anderen Katalysatoren. In einer besonders bevorzugten Ausführungsform wird $H_2N-(CH_2)_6-NH-(CH_2)_6-NH_2$ als erfindungsgemäßes Comonomeres eingesetzt. Es kommen jedoch auch z.B. folgende Verbindungen in Frage:

$H_2N-(CH_2)_2-NH-(CH_2)_2-NH_2$,

$H_2N-(CH_2)_5-NH-(CH_2)_5-NH_2$,

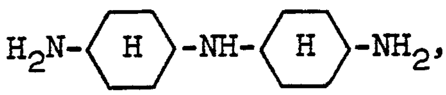,

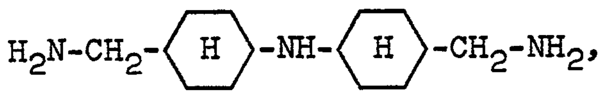,

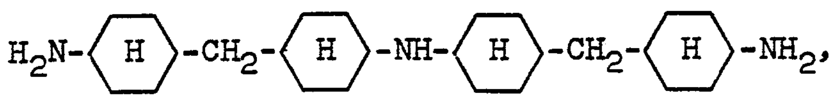,

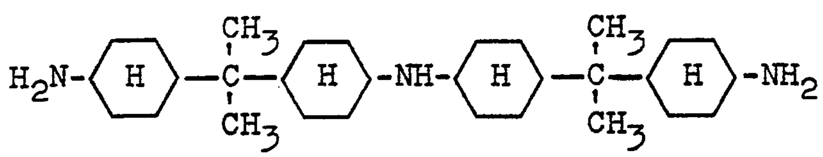.

Zweckmäßigerweise setzt man bei der Polymerisation äquivalente Mengen Dicarbonsäuren, z.B. Adipinsäure oder Terephthalsäure, bezogen auf die erfindungsgemäßen Comonomeren $H_2N-R-NH-R-NH_2$ zu.

Die Polymerisation erfolgt nach an sich bekannten Verfahren, vorzugsweise in Gegenwart geringer Mengen Wasser, sowie üblicher Regler und Katalysatoren. Bei dem besonders bevorzugten kontinuierlichen Verfahren wird die Polymerisation in Gegenwart von 0,1 bis 3 Gew.% Wasser, bezogen auf Caprolactam, und im wesentlichen drucklos oder bei geringen Unterdrücken bis zu 0,5 bar oder bei geringen Überdrücken bis zu 5 bar durchgeführt. Bevorzugt wird die Polymerisation in einem VK-Rohr gemäß DT-AS 14 95 198 ausgeführt. Die Zugabe der erfindungsgemäßen Comonomeren kann z.B. über das dem VK-Rohr zugeführte Caprolactam erfolgen, das gegebenenfalls auch die weiteren Comonomeren enthalten kann. Es hat sich jedoch als vorteilhaft gezeigt, das AH-Salze und/oder

TH-Salz separat, z.B. als wäßrige Lösungen oder auch in fester Form dem VK-Rohr zuzuführen. Für den Fall, daß wäßrige Lösungen oder bei Reaktionstemperaturen wasserabspaltende Comonomere verwendet werden, kann auf den Zusatz von Wasser im Caprolactam verzichtet werden. In einer besonders bevorzugten Form werden dem VK-Rohr einerseits 100 Gewichtsteile geschmolzenes $\varepsilon$-Caprolactam, zusammen mit dem erfindungsgemäßen Comonomeren $H_2N-(CH_2)_6-NH-(CH_2)_6-NH_2$ und andererseits 5 bis 30 Gewichtsteile AH-Salz und/oder TH-Salz als hochkonzentrierte wäßrige Lösungen oder als feste Salze zudosiert. Es ist auch möglich, die Comonomeren in Form eines gegebenenfalls $\varepsilon$-Caprolactam enthaltenden Präpolymeren, welches vorzugsweise einen Schmelzpunkt hat, der unterhalb der im VK-Rohr-Kopf herrschenden Reaktionstemperatur liegt, in fester Form zuzusetzen. In einer besonders bevorzugten Ausführungsform wird ein Präpolymeres aus 100 Gewichtsteilen AH-Salz und/oder TH-Salze und 5 bis 100 Gewichtsteilen $\varepsilon$-Caprolactam zudosiert.

Die nach dem erfindungsgemäßen Verfahren durch Kondensation in der Schmelze hergestellten Polymerisate enthalten im allgemeinen extrahierbare Anteile von 5 bis 15 Gew.%. Nach Abtrennen der niedermolekularen Anteile, z.B. durch Extraktion mit heißem Wasser, erhält man Polyamide mit K-Werten (gemessen nach Fikentscher Cellulosechemie <u>13</u>, 58 (1932) 0,5 %iger in 96 %iger Schwefelsäure) von 66 bis 86. Die Schmelzviskositäten der so hergestellten Produkte liegen vorzugsweise zwischen 2 000 und 20 000 Poise. (Falls nicht anders vermerkt, werden alle Schmelzviskositäten bei 270°C Meßtemperature in einem Kapillarviskosimeter KV 100 der Fa. Göttfert mit einem Schergefälle von 500 $sec^{-1}$ gemessen.)

Das erfindungsgemäße Verfahren liefert überraschenderweise ohne Vakuum und Nachkondensation in der festen Phase Produkte, die sich hervorragend auch für die Herstellung dünner Monofile und Folien eignen. Ein besonderer Vorteil ist, daß die Herstellung auch kontinuierlich nach dem billig und einfach auszuführenden VK-Rohr-Verfahren erfolgen kann. Die Die erfindungsgemäßen Polyamide weisen hohe,gleichmäßige und einheitliche Viskositäten auf. Die daraus hergestellten Monofile und Folien zeichnen sich durch optische Einheitlichkeit aus, sind völlig frei von Gelpartikeln und zeigen eine überraschend hohe Transparenz. Ursache für die hohe Transparenz ist vermutlich eine durch das überraschend günstige Erstarrungsverhalten verminderte Rauhigkeit der Folienoberfläche, was zu einer Reduzierung des Streulichtanteils führt.Die bevorzugten, aus 100 Gewichtsteilen $\varepsilon$-Caprolactam und 5 bis 30 Gewichtsteilen AH-Salz und/oder TH-Salz sowie $NH_2-(CH_2)_6-NH-(CH_2)_6-NH_2$ hergestellten Polyamide eignen sich besonders zur Herstellung von hochtransparenten Verbundfolien mit Polyäthylen durch Coextrusion nach dem Blasfolienverfahren.

Weitere Einzelheiten ergeben sich aus den Beispielen.

Die genannten Teile und Prozente beziehen sich auf das Gewicht.

Beispiel 1

a) Vergleichsversuch

100 Teile $\varepsilon$-Caprolactam und 13 Teile Wasser wurden in einem Autoklaven 2 Stunden bei 270°C und 20 bar vorkondensiert. Innerhalb von 1 Stunde wurde auf Normaldruck entspannt und dann 2 Stunden bei 270°C im Stickstoffstrom unter Normaldruck nachkondensiert. So hergestelltes Produkt zeigte nach Granulierung, Extraktion der niedermolekularen Anteile mit heißem Wasser und Trocknung einen K-Wert von 71 und eine Schmelzviskosität bei 270°C von 1 000 Poise.

Das Produkt ließ sich nicht zu Folien mit einer Stärke von 100 μm verblasen.

b) erfindungsgemäß

100 Teile ε-Caprolactam, 13 Teile Wasser, 0,4 Teile Adipinsäure und 0,4 Teile $NH_2-(CH_2)_6-NH-(CH_2)_6-NH_2$ (1,17 mMol/Mol Caprolactam) wurden wie in Beispiel 1 kondensiert. Das erhaltene Produkt zeigte nach Granulierung, Extraktion und Trocknung einen K-Wert von 78 und eine Schmelzviskosität von 2 200 Poise. Es ließ sich einwandfrei zu gleichmäßigen und stippenfreien Folien mit einer Dicke von 100 μm verblasen.

Beispiel 2

Vergleichsversuche

a) 84 Teile ε-Caprolactam, 16 Teile AH-Salz und 10 Teile Wasser wurden wie in Beispiel 1 kondensiert und aufgearbeitet. Der K-Wert des Produktes betrug 71, die Schmelzviskosität 1 360 Poise. Das Produkt konnte nicht zu Blasfolien mit einer Dicke von 100 μm verarbeitet werden.

b) Ein weiterer Teil des Produktes wurde in fester Form bei 140°C 25 Stunden im Stickstoffstrom nachkondensiert. Die Eigenfarbe veränderte sich dabei schwach zum Gelblichen. Anschließend betrug der K-Wert 81 und die Schmelzviskosität bei 270°C 2 300 Poise. Das Material ließ sich jetzt zu Folien mit iner Dicke von 100 μm verblasen.

c) erfindungsgemäß

Es wurde wie in Beispiel 2 a), jedoch unter Zusatz von 0,3 Teilen Adipinsäure und 0,3 Teilen $NH_2-(CH_2)_6-NH-(CH_2)_6-NH_2$ (0,97 mMol/Mol Monomeren) kondensiert. Nach Granulierung, Extraktion und Trocknung wurde ein Granulat mit einem K-Wert von 79 und einer Schmelzviskosität von 3 300 Poise erhalten. Das Produkt ließ sich ohne weitere Nachkondensation direkt zu gleichmäßigen und stippenfreien Folien mit einer Dicke von 100 /um verblasen.

d) Herstellung von Verbundfolien

Es wurde mit einer handelsüblichen Anlage zum Herstellen dreischichtiger Blasfolien gearbeitet. Der Blaskopf dieser Anlage hat drei konzentrisch angeordnete Ringdüsen-Spalte, wobei die Spaltweiten 0,7 mm betragen. Jeder der drei Ringdüsen-Spalte wird durch einen eigenen Extruder mit dem zu verarbeitenden Stoff versorgt; die Anlage wird von oben nach unten betrieben.

Folgende Einzelschichten wurden extrudiert:

aus der inneren Düse Polyäthylen (Dichte 0,930; Meltindex (MFI 190/2,16) von 0,2) mit einer Massetemperatur von 200°C und in einer Menge von 30 kg/h,

aus der mittleren Düse eine ternäres Copolymeres aus Äthylen mit 4 % Acrylsäure und 7 % Acrylsäure-tert.-butylester (Schmelzindex MFI bei 190°C und 2,16 kg von 6 bis 8 g/10 Minuten nach DIN 53 735) mit einer Massetemperatur von 190°C und einer Menge von 15 kg/h

und aus der äußeren Düse Polyamid nach den Beispielen 2 b) und 2 c) mit einer Massetemperatur von 250°C und einer

Menge von 23 kg/h.

Durch Druckluft wurde der entstehende schmelzflüssigplastische Folienschlauch so weit aufgeblasen, daß er einen Durchmesser von 300 mm bekam. Hierbei vereinigten und verschweißten sich die drei Einzelschichten. Die resultierende Schlauchfolie wurde gekühlt, über ein Walzenpaar abgezogen und anschließend aufgewickelt. Die Dicken der Einzelschichten waren: Polyäthylen 0,04 mm, ternäres Äthylencopolymerisat 0,02 mm, Polyamid 0,02 mm.

Die Verbundfolie aus Polyamid gemäß Beispiel 2 c) zeichnete sich durch ihre deutlich bessere Transparenz aus. Mikroskopische Aufnahmen ergaben, daß Folien gemäß aus Polyamid nach Beispiel 2 c) im Vergleich zu solchen nach Beispiel 2 b) eine gleichmäßigere Morphologie der Kristallisation und eine glättere Oberfläche der Polyamidoberfläche aufweisen.

Beispiel 3

a) Vergleichsversuch

Das Beispiel wurde ausgeführt in einem VK-Rohr gemäß DT-As 14 95 198 mit einer gerührten 1. Zone (VK-Rohr-Kopf) und 3 weiteren, durch Wärmeaustauscher getrennte Zonen im zylindrischen, nicht gerührten Teil. In den einzelnen Zonen wurden von oben nach unten die folgenden Temperaturen eingehalten: VK-Rohr-Kopf 256 bis 259°C, Rohrteil Zone 1: 265 bis 267°C, Zone 2: 269 bis 271°C, Zone 3: 249 bis 251°C.

Dem Kopf des VK-Rohres wurde kontinuierlich eine 90°C heiße $\varepsilon$-Caprolactamschmelze mit 0,5 % Wasser zugeführt.

Die Austragstemperatur aus dem VK-Rohr lag bei 250°C. Das

granulierte Produkt wurde mit heißem Wasser extrahiert und getrocknet. Es wurde anschließend ein K-Wert von 74,1 gemessen. Die Schmelzviskosität bei 270°C bstrug 1 420 Poise. Das Produkt konnte aufgrund seiner Viskosität nicht zu Schlauchfolien von 100 µm verblasen werden.

Um zufriedenstellende Schlauchfolien mit 100 µm Stärke herstellen zu können, mußte das Produkt 25 Stunden bei 140°C im $N_2$-Strom nachkondensiert werden. Dabei verfärbte es sich schwach gelblich und der K-Wert stieg auf 80 an.

b) erfindungsgemäß

Dem Kopf eines VK-Rohres wurden kontinuierlich 81 Teile ε-Caprolactam und 0,25 Teile $H_2N-(CH_2)_6-NH-(CH_2)_6-NH_2$ als Schmelze mit einer Temperatur von 90°C sowie 19 Teile eines Copolyamids aus 80 % AH-Salz und 20 % Caprolactam (Schmelzpunkt 220°C) in fester Form zugeführt. Temperatur und Verweilzeit wurden wie in Beispiel 3 a gewählt. Nach Extraktion und Trocknung betrug der K-Wert 78,2 und die Schmelzviskosität 2 300 Poise. Das Produkt zeigte eine ausgezeichnete Eigenfarbe und konnte einwandfrei zu Folien mit 100 µm Dicke und ausgezeichneter Transparenz und Gleichmäßigkeit geblasen werden.

## Patentansprüche

1. Polyamide mit einer Schmelzviskosität von mehr als 1 500 Poise auf der Basis von ε-Caprolactam, dadurch gekennzeichnet, daß sie 0,1 bis 2,5 mMol $H_2N-R-NH-R-NH_2$ pro Mol Caprolactam als Comonomeres einkondensiert enthalten, wobei R zweiwertige gesättigte aliphatische oder alicyclische Kohlenwasserstoffreste mit 2 bis 15 Kohlenstoffatomen sind.

2. Polyamide gemäß Anspruch 1, dadurch gekennzeichnet, daß sie $H_2N-(CH_2)_6-NH-(CH_2)_6-NH_2$ als Comonomeres enthalten.

3. Polyamide gemäß Anspruch 1 und 2, dadurch gekennzeichnet, daß sie auf 100 Gewichtsteile Caprolactam 5 bis 30 Gewichtsteile AH-Salz und/oder TH-Salz einkondensiert enthalten.

4. Verfahren zur Herstellung der Polyamide gemäß Anspruch 1 bis 3, dadurch gekennzeichnet, daß die Monomeren kontinuierlich in Gegenwart geringer Mengen Wasser im VK-Rohr polymerisiert werden.

5. Verfahren zur Herstellung von Polyamiden nach Anspruch 4, dadurch gekennzeichnet, daß dem VK-Rohr das ε-Caprolactam und das erfindungsgemäße Comonomere als wasserfreie Schmelze und das AH-Salz und/oder das TH-Salz als wäßrige Lösung oder als Feststoff zugeführt werden.

6. Verfahren zur Herstellung von Polyamiden nach Anspruch 4, dadurch gekennzeichnet, daß dem VK-Rohr das ε-Caprolactam und das erfindungsgemäße Comonomere als Schmelze und ein Präpolymeres aus AH-Salz und/oder TH-Salz und/oder ε-Caprolactam (welches einen Schmelzpunkt hat, der unter der Reaktionstemperatur im VK-Rohr-Kopf liegt),

in fester Form zugeführt werden.

7. Verwendung der Polyamide nach Anspruch 1 zur Herstellung von Folien und Monofilen.

8. Verwendung der Polyamide nach Anspruch 1 zur Herstellung von Verbundfolien mit Polyäthylen durch Coextrusion.

Europäisches Patentamt

# EUROPÄISCHER RECHERCHENBERICHT

0000363
Nummer der Anmeldung
EP 78 10 0285

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | CHEMICAL ABSTRACTS, Vol. 71, Nr. 24, 15.Dezember 1969, 113472q, "Viscosity stabilization of polycaprolactam", Yamamoto, Ichisuke, Teijin Ltd.<br>& JA 69 19 264<br>-- | 1 |
| A | FR - A - 2 003 370 (ALLIED CHEMICAL)<br>* Seite 5, Zeile 7 bis Seite 6, Zeile 13; Anspruch 7 *<br>-- | 1 |
| A | FR - A - 860 533 (DU PONT)<br>* Seite 5, rechte Spalte, Zeilen 60-85 *<br>---- | 1 |

KLASSIFIKATION DER ANMELDUNG (Int.Cl.²)

C 08 G 69/14
C 08 G 69/16

RECHERCHIERTE SACHGEBIETE (Int. Cl.²)

C 08 G 69/14
C 08 G 69/16

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 18-10-1978 | LEROY |